# EUROPÄISCHE PATENTSCHRIFT

(11) **EP 1 136 621 B1**
(45) Veröffentlichungstag und Bekanntmachung des Hinweises auf die Patenterteilung: **17.01.2007**
(21) Anmeldenummer: 01102926.1
(22) Anmeldetag: 08.02.2001
(51) Int. Cl.: D21G 1/02, D21F 5/02

(54) **Rotierbare Walze**
Rotary roller
Rouleau rotative

(30) Priorität: 14.03.2000 DE 10012062; 08.04.2000 DE 10017604
(43) Veröffentlichungstag der Anmeldung: 26.09.2001
(73) Patentinhaber: Walzen Irle GmbH, D-57250 Netphen (DE)
(72) Erfinder: Von Schweinichen, Jaxa, 57250 Netphen (DE)
(74) Vertreter: Grosse, Wolf-Dietrich Rüdiger

(56) Entgegenhaltungen:
- EP-A- 0 903 438
- DE-A- 4 036 121
- DE-U- 20 011 530
- US-A- 3 834 205
- US-A- 5 292 298

## Beschreibung

Die Erfindung betrifft eine rotierbare Walze mit einem Walzenkörper, dem Kanäle zur Durchleitung eines Mediums zugeordnet sind, nach dem Oberbegriff des Anspruchs 1 bzw. 6

Derartige Walzen finden sich in vielerlei Anwendungsbereichen, beispielsweise in der Herstellung von Papier, in der Lebensmittelindustrie sowie bei Walzvorgängen von Kunststoff oder Stahl, etwa beim Gießwalzen im Stranggießverfahren. Es ist hierbei bekannt, Walzenkörper mit beispielsweise axialen, dicht unter der Oberfläche verlaufenden Kanälen zu ihrer Temperierung, beispielsweise Beheizung, zu versehen. Eine derartige Walze geht beispielsweise aus der EP 0 606 660 A1 hervor.

Bei parallelwandigen Kanälen, wie sie durch Bohrungen herstellbar sind, zur Durchleitung des Mediums, insbesondere einer Heizflüssigkeit, ist bei einer laminaren Strömung ein hoher Bedarf an Heizmedium erforderlich. Zudem geben nur die äußeren Bereiche des Strömungsprofils hinreichend Wärme an die Wandungen des Kanals, und damit an die Walze, ab. Innen liegende Strömungsfäden behalten zum größten Teil ihre Wärmeenergie, was den Wirkungsgrad verschlechtert.

Die US 3 834 205 offenbart bereits eine Walze, in deren peripheren Bohrungen Verdrängerkörper angeordnet sind, wodurch die innen liegenden Strömungsfäden nach außen verlagert worden sind. Zudem weisen die Wandungen der peripheren Bohrungen spiralförmig angeordnete Vertiefungen auf. Das Herstellen dieser Vertiefungen ist jedoch sehr aufwendig und teuer. Hinzu kommt, dass auch hier nur am Rande der Kanäle im Bereich der Vertiefungen Verwirbelungen entstehen. Am Verdrängerkörper strömt das Heizmedium quasi laminar entlang.

Die EP 903 438 A2 offenbart eine Walze mit entsprechenden Kanälen, die in ihrem zur Walzenoberfläche weisenden Bereich Kupfereinsätze aufweisen, die sich in einem innigen Kontakt mit den Kanalwänden befinden, um so eine gute Wärmeleitung zu gewährleisten. Die Einsätze besitzen auf der in den Kanal weisenden Seite Erhöhungen und Vertiefungen. Durch die Vertiefungen soll Kondensat abgeleitet werden. Die Erhöhungen sind so angeordnet, dass sie aus dem Kondensat heraus ragen, so dass der im Kanal geführte Dampf die Kupfereinsätze aufheizen kann, welche ihre Energie an die Walzenoberfläche abgeben. Auch diese Lösung ist aufwändig und teuer.

Der Erfindung liegt die Aufgabe zugrunde, einen verbesserten Wärmeübergang zu erreichen.

Die Erfindung löst dieses Problem durch eine Walze mit den Merkmalen des Anspruchs 1 oder 6. Vorteilhafte Ausgestaltungen der Erfindung sind in den Ansprüchen 2 bis 5, 7 bis 22 angegeben.

Durch das Vorsehen von Trennkörpern wird dem Mediumstrom ein kleinerer Querschnitt im Kanal zur Verfügung gestellt, so daß sich die Geschwindigkeit des Temperiermediums erhöht, wodurch ein besserer Temperaturübergang gewährleistet ist. Hinzu kommt, daß der so geteilte Kanal gleichzeitig z.B. als Vor- und Rücklauf für das Temperiermedium dienen kann. Hier ist eine Halbierung des Kanals, eine Drittelung oder Viertelung von Vorteil. Noch größere Teilungen sind ebenfalls denkbar. Besonders vorteilhaft ist, wenn der Trennkörper die Form einer mehrgängigen Wendel aufweist, so daß allein durch die Wendelung eine Verwirbelung des Temperiermediums erfolgt. Hinzu kommt, daß die Verweildauer des Temperiermediums durch den größeren zurückzulegenden Weg höher ist. Die Verwirbelung, die Erhöhung der Verweildauer und die Geschwindigkeitserhöhung durch die Kanaleinengung bewirken einen optimalen Wärmeübergang.

Durch die erfindungsgemäße Ausbildung einer Walze nach Anspruch 6 ist ein Abweichen der Durchströmung von der Laminarität gewährleistet. Es ergibt sich eine Turbulenz, mit der das pro Zeiteinheit den oder die Kanäle der Walze durchströmende Volumen von Temperiermedium verringert wird. Dadurch ergibt sich eine Einsparung an beispielsweise Heizflüssigkeit. Gleichzeitig ist der Wärmeübergang zur Walze jedoch verbessert, ein größerer Anteil des Heizmediums tritt in Kontakt mit den Wandungen der Kanäle.

Wenn der Ablenkkörper einen in Einbaustellung der Kanalrichtung folgende Längsausdehnung hat, kann der Ablenkbereich sich über einen großen Längsanteil des Kanals erstrecken. Der Wärmeübergang ist dann über einen großen Längsbereich des Kanals verbessert. Bei Anordnung des Ablenkbereiches, zumindest im Außenbereich des Ablenkkörpers, ist im Gebiet, das den Kanalwandungen benachbart ist, die Verwirbelung erreicht. Der Wirkungsgrad ist dadurch besonders gut. Dabei kann der Ablenkkörper sowohl eine starre Längsachse haben als auch insgesamt, beispielsweise nach Art einer Schraubenfeder, einen Ablenkbereich ausbilden.

Eine besonders günstige Konstellation ergibt sich, wenn der Ablenkbereich das umströmende Medium in Rotation versetzt, was beispielsweise durch eine der Längsachse folgende spiralförmige Gestalt des Ablenkkörpers erreicht werden kann.

Wenn die Ablenkbereiche über den axialen Verlauf des Ablenkkörpers variierende Steigungen aufweisen, können Walzenbereiche gezielt mit unterschiedlicher Intensität vom Temperiermedium beaufschlagt werden.

Ein besonderer Vorteil ergibt sich, wenn die Trennkörper und Ablenkkörper in einen Kanal eingesetzt werden, wobei die Trennkörper als Träger für die Ablenkkörper dienen können.

Weitere Vorteile und Merkmale ergeben sich aus in der Zeichnung dargestellten Ausführungsbeispielen des Gegenstandes der Erfindung.

In der Zeichnung zeigt:
- Figur 1: einen Ablenkkörper, der insgesamt schneckenförmig ausgebildet ist,
- Figur 2: einen ähnlichen Ablenkkörper wie Figur 1, bei dem eine starre mittige Längsachse vorgesehen ist, auf dem außenseitig eine Schnecke angeordnet ist,
- Figur 3: einen gradlinigen Heizkanal, der beispielsweise als Bohrung in einem Walzenkörper ausgebildet sein kann,
- Figur 4: einen insgesamt nach Art einer Schraubenfeder ausgebildeten Ablenkkörper,
- Figur 5: einen Heizkanal, der eine Umlenkung um 180° aufweist und bei dem Einlaß- und Ausströmöffnung auf der gleichen Walzenseite liegen,
- Figur 6a: eine Parallelanordnung mehrerer sogenannter Monopasskanäle,
- Figur 6b: eine Duopassanordnung, bei der Einström- und Auslaßöffnung auf einer Seite liegen,
- Figur 6c: eine Tripassanordnung, bei der zwei Umlenkungen ausgebildet sind,
- Figur 6d: eine Quatropassanordnung, bei der ein Kanal drei Umlenkungen um jeweils 180° unterworfen ist,
- Figur 7a: eine Anordnung, bei der zwei Einlaßöffnungen in eine Auslaßöffnung münden,
- Figur 7b: eine umgekehrte Anordnung, bei der eine Einlaßöffnung in zwei Auslaßöffnungen mündet,
- Figur 7c: eine Anordnung, bei der drei Einlaßöffnungen in eine Ausströmöffnung münden,
- Figur 8: eine schematische Schnittdarstellung einer Walze mit einem zentralen, als Durchströmkanal für Temperierungsmedium genutzten Hohlraum, in den ein Ablenkkörper eingesetzt ist,
- Figur 9: einen Trennkörper in der Form einer zweigängigen Wendel, wobei sich der Steigungswinkel der Wendel in Strömungsrichtung kontinuierlich verkleinert, und
- Figur 10: einen Trennkörper der gleichzeitig Ablenkkörper aufweist.

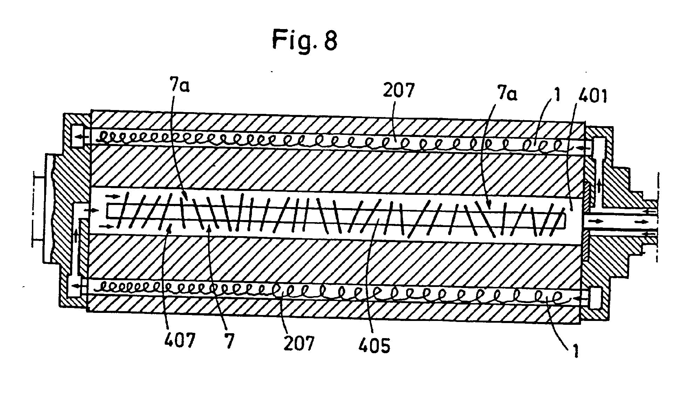

Im einzelnen weist eine erfindungsgemäße Walze (gezeichnet in Fig. 8) einen oder mehrere sich axial und über den Umfang in der Walze verteilt angeordnete Durchströmungskanäle 1, 101, 201, 301, 501, 601 für ein Medium, insbesondere eine Flüssigkeit, zur Temperierung der Walze auf. Derartige Kanäle können beispielsweise durch Bohrungen angefertigt sein und dann einen gradlinigen Verlauf haben. In aller Regel werden mehrere derartiger Kanäle in einer Walze angeordnet sein. Ein derartiger Walzenkörper ist beidseitig mit Flanschzapfen ausgestaltet, mittels denen auch ein Anschluß der Kanäle zu einer äußeren Versorgung mit Heiz- oder Kühlmedium sichergestellt ist. Ein zentraler, axialer Hohlbereich ist bei einer Hohlwalze (Fig. 8) als Durchströmkanal 401 für Temperierungsmedium nutzbar, wobei dieser Kanal 401 beispielsweise als Hinleitung und ein peripherer Kanal 1, 101, 201, 301, 501, 601 als Rücklaufleitung dienen kann oder umgekehrt. Der zentrale Durchströmkanal 401 kann zur besseren Abstimmung der Strömungsverhältnisse ebenfalls mit einem Ablenkkörper 405 versehen sein, der in seinen Ausmaßen an die axiale und radiale Erstreckung des Hohlraums angepasst ist.

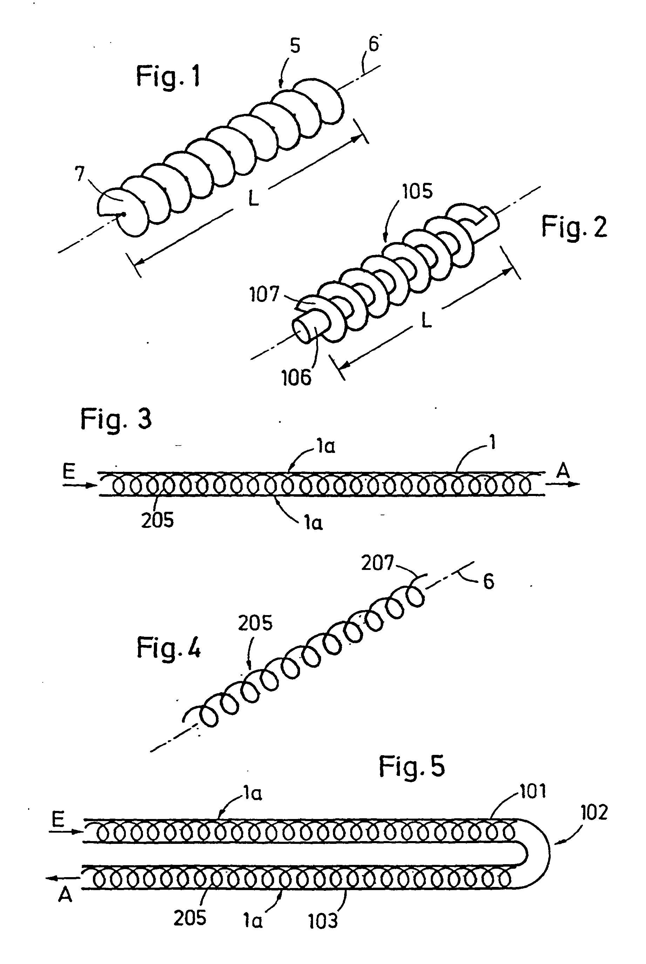

In Figur 3 ist ein gradlinig verlaufender Kanal 1 gezeigt, der auf einer Walzenseite einen Einlaß E und auf der anderen Seite einen Auslaß A für das durchströmende Medium aufweist.

In einem weiteren Ausführungsbeispiel (Figur 5) ist ein Kanal 101 dargestellt, dessen Einlaß E und Auslaß A auf derselben Seite der den Kanal umgebenden Walze liegen. Gegenüber von Ein- und Auslaß befindet sich ein axialer Endbereich 102, in dem eine Umlenkung des Kanals 101 um 180° ausgebildet ist, wodurch sich die zur Auslaßseite A ergebende Rückführung 103 ausbildet.

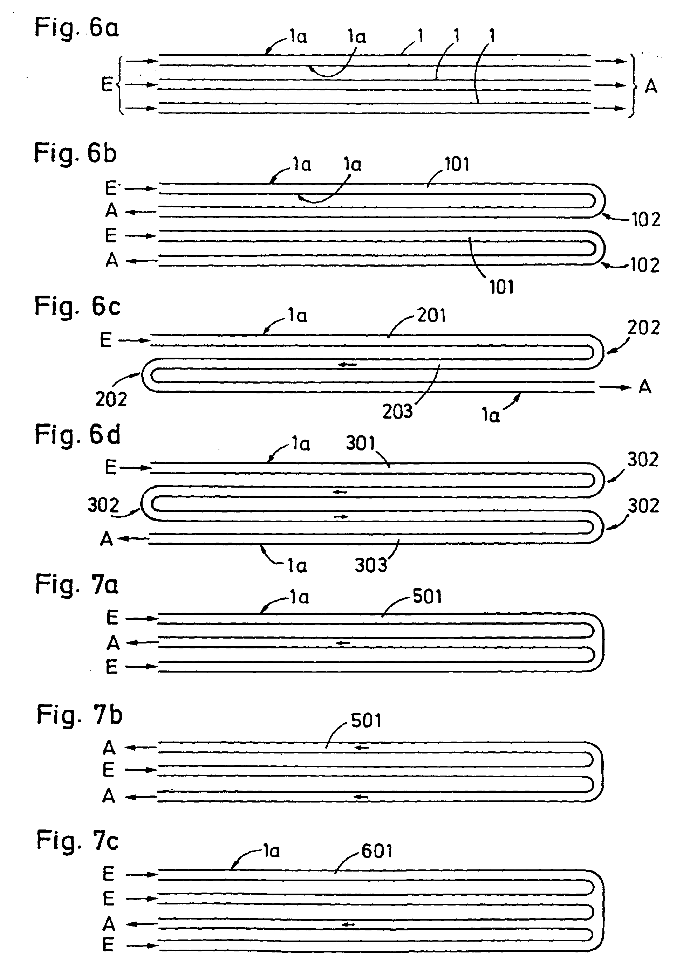

Gemäß dem Ausführungsbeispiel nach Figur 6c sind zwei Umlenkungen 202 ausgebildet, so daß Einlaßseite E und Auslaßseite A des Kanals 201 auf gegenüberliegenden Seiten der Walze liegen. Nach Figur 6d sind drei Umlenkungen 302 vorgesehen, so daß Einlaß E und Auslaß A eines derartigen Kanals 301 wieder auf der selben Seite des Walzenkörpers liegen. Alle derartigen Kanäle 1, 101, 201, 301 durchdringen den Walzenkörper über seine axiale Erstreckung bevorzugt im wesentlichen oder vollständig.

Der Kanal 501 ist derartig ausgebildet, daß zwei außen liegende Eingangsleitungen E zu einer mittigen Ausgangsleitung A führen. Die Anzahl von Ein- und Ausströmöffnungen E, A ist daher unterschiedlich. Gleiches gilt auch für das Kanalsystem nach Figur 7b, bei dem Eingangs- und Ausströmöffnungen vertauscht wurden. Der Kanal 601 nach Figur 7c weist drei Eingangsöffnungen E und eine Ausgangsöffnung A auf, so daß auch hier die Anzahl von Einströmöffnungen und Ausströmöffnungen E, A unterschiedlich ist.

In Figur 1 ist ein Ablenkkörper 5 dargestellt, der eine Längsausdehnung L parallel zu seiner Längsachse 6 aufweist. Der Ablenkkörper 5 umfaßt einen Ablenkbereich 7, der als die Längsachse 6 umlaufende Schnecke ausgebildet ist, und gegenüber der Längsachse 6 schräg angestellt ist. Bei Einbaustellung in einen Kanal 1, 101, 201, 301, 501, 601 sind die Ablenkbereiche 7 spitzwinklig gegenüber den Wandungen 1a des Kanals 1, 101, 201, 301, 501, 601 angestellt.

Der Ablenkkörper 5, 105 nach Figur 2 umfaßt eine starr ausgebildete Mittelachse 106, um die herum sich die schräg angestellten und wendelförmig ausgebildeten Ablenkbereiche 107 erstrecken. Die Ablenkbereiche können nach Art einer Schnecke über den gesamten Längsverlauf L des Ablenkkörpers 105 zusammenhängend ausgebildet sein, oder es können einzelne schräg gestellte Ablenkbereiche 107 vorhanden sein.

Gemäß einem dritten Ausführungsbeispiel ist der Ablenkkörper 205 insgesamt als schraubenfederartiger Körper ausgebildet, so daß die Längsachse 6 lediglich von den Ablenkbereichen 207 umgeben ist.

Die Figuren 3 und 5 zeigen einen Ablenkkörper 205 bei Einsatz in einen Kanal 1 bzw. 101, der in dem Walzenkörper einer temperierbaren Walze, beispielsweise einer holzylindrischen Walze, angeordnet ist. Wie oben beschrieben, liegen derartige Kanäle 1, 101 wie auch die Kanäle der weiteren Ausführungsbeispiele dicht unterhalb der äußeren Walzenoberfläche, um damit einen möglichst effektiven Heizvorgang zu ermöglichen.

Sämtliche gezeigten Ablenkkörper 5, 105, 205, 405 bilden im Heizmedium eine turbulente Strömung aus, so daß die einzelnen strömenden Teilchen einen längeren Weg im Kanal 1, 101, 201, 301, 401, 501, 601 zurückzulegen haben und daher die Verweildauer - mithin auch die Energieübertragungszeit - vergrößert ist. Dieser Effekt bleibt auch bei einer punktuell vergrößerten Fließgeschwindigkeit der Teilchen des Mediums erhalten, wie es durch die Turbulenzen ausgelöst werden kann. Auch sind Ablenkkörper 5, 105, 205, 405 mit derartigen - eventuell nicht formstabilen, sondern durch das anströmende Medium zu formenden - Ablenkbereichen 7, 107, 207, 407 möglich, daß dadurch eine chaotische Strömung des Mediums bewirkt ist. Diese kann sich im Zeitverlauf oder bei Änderung des Drucks von durchgeleitetem Medium ändern.

Bei Verwendung eines federähnlichen oder anders deformierbaren Ablenkkörpers 205 kann die Steigung der Ablenkbereiche 207 oder die Länge L des Ablenkkörpers gegebenenfalls während die Betriebes variiert werden, um damit die Art der Turbulenzen und die eventuell zusätzlich ausgebildete Rotation beeinflussen zu können und so die Parameter Fließgeschwindigkeit, einzubringende Flüssigkeitsmenge, bzw. Gasmenge, Verweildauer und Turbulenz des eingebrachten Mediums beeinflussen zu können. Über den axialen Verlauf eines Ablenkkörpers 5, 105, 205, 405 kann die Steigung des Ablenkbereichs 7, 107, 207, 407 variieren, so daß Bereiche 7a mit geringerer Steigung und Bereiche 7b mit größerer Steigung vorhanden sind. Bereiche mit gleicher oder unterschiedlicher Steigung 7a, 7b können zudem räumlich zueinander beabstandet sein.

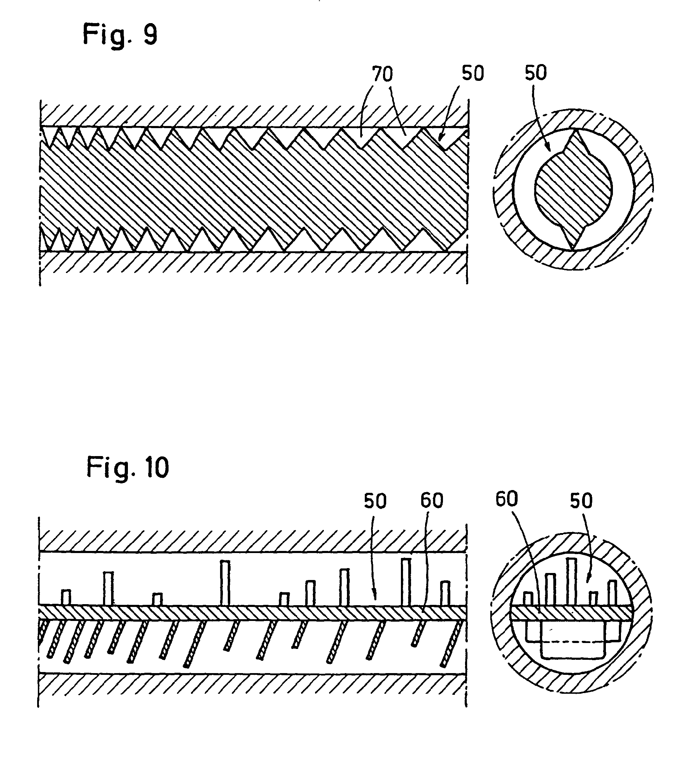

Figur 9 zeigt einen Trennkörper 50 in Form einer zweigängigen Wendel 70, wie er in einen Kanal eingesetzt werden kann. Dabei kann der Hinstrom des Temperiermediums in der einen Wendel und der Rückstrom des Temperiermediums in der zweiten Wendel erfolgen. Dabei kann die Hin- und Rückführung in einem Kanal vorgesehen sein. Es besteht jedoch auch die Möglichkeit, dass die Hinführung des Temperiermediums in einer Wendel eines Kanals und die Rückführung dieses Temperiermediums in einer Wendel eines anderen Kanals erfolgt. Es besteht auch durchaus die Möglichkeit, beide Wendel eines Kanals mit dem hinfließenden bzw. hinströmenden Temperiermedium zu speisen, wobei sogar unterschiedliche Temperiermedien, d. h. unterschiedlich in Konsistenz und/oder Temperatur und/oder Geschwindigkeit eingespeist werden können.

Die Figur 9 zeigt, dass sich der Steigungswinkel der Wendel, die beide zur Hinleitung von Temperiermedium verwendet werden, in Strömungsrichtung kontinuierlich verkleinert. Damit wird der Weg für das Temperiermedium länger, die Verweilzeit größer und die Geschwindigkeit muss entsprechend erhöht werden, so dass ein besserer Wärmeübergang ermöglicht wird.

Die Figur 10 zeigt einen Trennkörper 50, der gleichzeitig Ablenkkörper einstückig aufweist. Diese sind in einem Teilbereich des Kanals vollkommen beliebig angeordnet. Im zweiten Teilbereich sind die Ablenkkörper mit sich kontinuierlich ändernder Steigung vorgesehen.

Durch rechnergestützte Simulationen läßt sich eine Optimierung derartiger Ablenkkörper und/oder Trennkörper erreichen, so daß die Wärmeabgabe möglichst über den gesamten axialen Längsverlauf des Walzenkörpers gleichgehalten wird. Bei variierenden Steigungen 7a, 7b ist alternativ auch eine punktuell steuerbare Wärmeabgabe möglich.

Die gezeigten Ablenkkörper 5, 105, 205, 405 sowie die Trennkörper können auch beliebige andere Gestalt haben. Sie sind nachträglich in Kanäle 1, 101, 201, 301, 401, 501, 601, einsetzbar. Damit ist eine besondere Montageerleichterung gegeben. Auch herkömmliche Walzen lassen sich auf diese Weise umrüsten.

Es ist nicht zwingend, daß die Ablenkbereiche 7, 107, 207, 407 wie in den Ausführungsbeispielen dargestellt, das Medium in Rotation versetzen. Dieses erlaubt jedoch eine gleichmäßige und vorhersagbare Abfolge der turbulenten Strömungen in dem Kanal der zu temperierenden Walze.

Die Ablenkkörper 5, 105, 205, 405 und oder Trennkörper können je nach eingesetztem Medium aus unterschiedlichen Materialien gebildet sein, beispielsweise aus Edelstahl oder Kunststoff, sofern korrosive Medien verwendet werden.

## Patentansprüche

1. Rotierbare Walze mit einem Walzenkörper, dem Kanäle zur Durchleitung eines zur Temperaturregelung des Walzenkörper dienenden Mediums, insbesondere einer Flüssigkeit, zugeordnet sind,
**dadurch gekennzeichnet,**
**daß** mindestens einem der Kanäle ein diesen teilender Trennkörper (50) zugeordnet ist, so daß Temperiermedien unterschiedlicher Konsistenz und/oder Temperatur und/oder Strömungsrichtung und/oder Strömungsgeschwindigkeit in den Teilkanälen zu strömen vermögen.

2. Walze nach Anspruch 1,
**dadurch gekennzeichnet,**
**daß** der Trennkörper (50) die Form einer flachen Leiste (60) aufweist.

3. Walze nach Anspruch 1,
**dadurch gekennzeichnet,**
**daß** der Trennkörper die Form eines Dreiecks aufweist.

4. Walze nach Anspruch 1,
**dadurch gekennzeichnet,**
**daß** der Trennkörper die Form eines Kreuzes aufweist.

5. Walze nach Anspruch 1,
**dadurch gekennzeichnet,**
**daß** der Trennkörper die Form einer mehrgängigen Wendel (70) aufweist.

6. Rotierbare Walze mit einem Walzenkörper, dem Kanäle (1;101; 201; 301; 401; 501; 601) zur Durchleitung eines zur Temperaturregelung des Walzenkörpers dienenden Mediums, insbesondere einer Flüssigkeit, zugeordnet sind,
**gekennzeichnet durch**
zumindest einen zumindest einem Bereich der Kanäle zugeordneten und auf das Medium einwirkenden Ablenkkörper (5; 105; 205; 405), der in Einbaustellung zumindest bereichsweise einen gegenüber einem Wandungsbereich (1a) des Kanals (1; 101; 201; 301; 401; 501; 601) spitzwinklig angestellten Ablenkbereich (7; 107; 207; 407) umfasst, wobei der Ablenkkörper (5; 105; 205; 405) eine in Einbaustellung der Kanalrichtung folgende Längsausdehnung (L) hat und der Ablenkbereich (7; 107;207;407) die Längsachse (6) des Ablenkkörpers (5; 105; 205; 405) wendelförmig umgibt.

7. Walze nach Anspruch 6,
**dadurch gekennzeichnet,**
**daß** der Ablenkbereich (7; 207) den Ablenkkörper insgesamt umfasst.

8. Walze nach Anspruch 6,
**dadurch gekennzeichnet,**
**daß** die Längsachse (6) des Ablenkkörpers (105; 405) als starre Mittelachse ausgebildet ist.

9. Walze nach einem der Ansprüche 6 bis 8,
**dadurch gekennzeichnet,**
**daß** der Ablenkbereich (7;107;207;407) das umströmende Medium in Rotation versetzt.

10. Walze nach einem der Ansprüche 6 bis 9.
**dadurch gekennzeichnet,**
**daß** der Ablenkbereich eine in Längsrichtung (L) des Ablenkkörpers (5; 105; 205; 405) ansteigende spiralförmige Gestalt hat.

11. Walze nach einem der Ansprüche 6 bis 9,
**dadurch gekennzeichnet,**
**daß** der Ablenkbereich (7; 107; 407) als Schnecke ausgebildet ist.

12. Walze nach einem der Ansprüche 6 bis 11,
**dadurch gekennzeichnet,**
**daß** der Ablenkkörper (205) nach Art einer Schraubenfeder ausgebildet ist.

13. Walze nach einem der Ansprüche 1 bis 12,
**dadurch gekennzeichnet,**
**daß** zumindest einer der Kanäle (101;201; 301; 501; 601) an einem axialen Endbereich eine Umlenkung (102;202; 302) um 180° und eine parallele Rückführung (103; 203; 303) aufweist.

14. Walze nach Anspruch 13,
**dadurch gekennzeichnet,**
**daß** zumindest ein Kanal (201; 301; 501;601) mehrere Umlenkungen (202; 302) umfaßt.

15. Walze nach einem der Ansprüche 1 bis 14,
**dadurch gekennzeichnet,**
**daß** zumindest einer der Kanäle (501;601) eine unterschiedliche Anzahl von Ein- und Ausströmöffnungen (E; A) für das Medium aufweist.

16. Walze nach einem der Ansprüche 1 bis 15,
**dadurch gekennzeichnet,**
**daß** die Walze einen zentralen axialen Hohlraum (401) aufweist und in diesem zumindest ein Ablenkkörper (405) angeordnet ist.

17. Walze nach einem der Ansprüche 6 bis 16,
**dadurch gekennzeichnet,**
**daß** der Ablenkkörper (5; 105; 205; 405) Ablenkbereiche (7a; 7b) mit unterschiedlichen Steigungen aufweist.

18. Walze nach einem der Ansprüche bis 17,
**dadurch gekennzeichnet,**
**daß** der Ablenkkörper (5; 105; 205; 405) entlang seiner Längsachse (6) Abweichungen seines Durchmessers aufweist.

19. Walze nach einem der Ansprüche 6 bis 18,
**dadurch gekennzeichnet,**
**daß** ein schraubenlinienförmig gewendelter Ablenkkörper (205) entlang seiner Länge unterschiedliche Durchmesser zeigende Mittelausnehmungen aufweist.

20. Walze nach einem der Ansprüche 1 bis 12,
**dadurch gekennzeichnet,**
**daß** die Abstände der Ablenkbereiche (7; 7a;7b) zueinander unterschiedliche Abmessungen aufweisen.

21. Walze nach einem der Ansprüche 6 bis 20,
**dadurch gekennzeichnet,**
**daß** die Ablenkkörper (405) statistisch beliebig gerichtete Ablenkflächenbereiche zur Erzeugung chaotischer Strömungen aufweisen.

## Claims

1. A rotatable roller with a roller body, to which channels are assigned for guiding a medium, particularly a liquid, through the roller body in order to control the temperature thereof,
**characterised in that**
a separating member (50) is associated with and separates at least one of the channels, so that tempering media of differing consistency and/or temperature and/or flow direction and/or flow speed are able to flow into the partial channels.

2. The roller as recited in claim 1,
**characterised in that**
the separating member (50) has the shape of a flat rod (60).

3. The roller as recited in claim 1,
**characterised in that**
the separating member has a triangular shape.

4. The roller as recited in claim 1,
**characterised in that**
the separating member has the shape of a cross.

5. The roller as recited in claim 1,
**characterised in that**
the separating member has the form of a multiple-thread helix (70).

6. A rotatable roller with a roller body, to which channels (1; 101; 201; 301; 401; 501; 601) are assigned for guiding a medium, particularly a liquid, through the roller body in order to control the temperature thereof,
**characterised by**
at least one deflecting element (5; 105; 205; 405) associated with at least one area of the channels and acting on the medium, and which in the installed position at least partially encompasses a deflection area (7; 107; 207; 407) that is disposed at an acute angle to a wall area (1a) of the channel (1; 101; 201; 301; 401; 501; 601), wherein the deflecting element (5; 105; 205; 405) in the installed position has a longitudinal extension (L) following the direction of the channel, and the deflection area (7; 107; 207; 407) encompasses the longitudinal axis (6) of the deflecting element (5; 105; 205; 405) in the manner of a helix.

7. The roller as recited in claim 6,
**characterised in that**
the deflection area (7; 207) encompasses the deflecting element entirely.

8. The roller as recited in claim 6,
**characterised in that**
the longitudinal axis (6) of the deflecting element (105; 405) is configured as a rigid central axle.

9. The roller as recited in any of claims 6 to 8,
**characterised in that**
the deflection area (7; 107; 207; 407) imparts rotation to the circulating medium.

10. The roller as recited in any of claims 6 to 9,
**characterised in that**
the deflection area has a spiral form that increases in the longitudinal direction (L) of the deflecting element (5; 105; 205; 405).

11. The roller as recited in any of claims 6 to 9,
**characterised in that**
the deflection area (7; 107; 407) is conformed as a screw.

12. The roller as recited in any of claims 6 to 11,
**characterised in that**
the deflecting element (205) is configured in the manner of a helical spring.

13. The roller as recited in any of claims 1 to 12,
**characterised in that**
at least one of the channels (101; 201; 301; 501; 601) has a direction change (102; 202; 302) through 180° at one axial end area thereof and a parallel return flow (103; 203; 303).

14. The roller as recited in claim 13,
**characterised in that**
at least one channel (201; 301; 501; 601) includes multiple direction changes (202; 302).

15. The roller as recited in any of claims 1 to 14,
**characterised in that**
at least one of the channels (501; 601) has a different number of inlet and outlet apertures (E; A) for the medium.

16. The roller as recited in any of claims 1 to 15,
**characterised in that**
the roller has a central, axial cavity (401) and at least one deflecting element (405) is arranged therein.

17. The roller as recited in any of claims 6 to 16,
**characterised in that**
the deflecting element (5; 105; 205; 405) is furnished with deflection areas (7a; 7b) having different gradients.

18. The roller as recited in any of claims 6 to 17,
**characterised in that**
the deflecting element (5; 105; 205; 405) is furnished with areas of differing diameter along the longitudinal axis (6) thereof.

19. The roller as recited in any of claims 6 to 18,
**characterised in that**
a deflecting element (205) that is wound helically is furnished with central recesses having varying diameters along its length.

20. The roller as recited in any of claims 1 to 12,
**characterised in that**
the distances between the deflection areas (7; 7a; 7b) are of different dimensions.

21. The roller as recited in any of claims 6 to 20,
**characterised in that**
the deflecting elements (405) have deflection surface areas aligned statistically in any direction to generate chaotic flows.

## Revendications

1. Cylindre rotatif avec un noyau de cylindre, auquel sont associés des conduits pour faire circuler un fluide destiné à la régulation thermique du noyau de cylindre, notamment un liquide,
**caractérisé en ce que**
à au moins l'un des conduits est associé un élément séparateur (50) séparant ce dernier, pour permettre à des fluides d'équilibrage de température de différente consistance et/ou température et/ou direction d'écoulement et/ou vitesse d'écoulement de circuler dans les conduits partiels.

2. Cylindre selon la revendication 1,
**caractérisé en ce que**
l'élément de séparation (50) a la forme d'une baguette plate (60).

3. Cylindre selon la revendication 1,
**caractérisé en ce que**
l'élément de séparation a la forme d'un triangle.

4. Cylindre selon la revendication 1,
**caractérisé en ce que**
l'élément de séparation a la forme d'une croix.

5. Cylindre selon la revendication 1,
**caractérisé en ce que** l'élément de séparation a la forme d'une hélice (70) à plusieurs spires.

6. Cylindre rotatif avec un noyau de cylindre, auquel sont associés des conduits (1 ; 101 201 ; 301 ; 401 ; 501 ; 801) pour faire circuler un fluide destiné à la régulation thermique du noyau de cylindre, notamment un liquide,
**caractérisé par**
au moins un élément de déviation (5 ; 105 ; 205 ; 405) associé à au moins une zone des conduits et agissant sur le fluide, qui, en position de montage comprend au moins par zones une zone de déviation (7 ; 107 207 ; 407) en prise à angle aigu par rapport à une zone de paroi (1a) du conduit (1 ; 101 ; 201 ; 301 ; 401 ; 501 ; 601), l'élément de déviation (5 ; 105 ; 205 ; 405) ayant une extension longitudinale (L) suivant la direction des conduits, dans la position de montage et la zone de déviation (7 ; 107 207 ; 407) entourant en forme d'hélice l'axe longitudinal (6) de l'élément de déviation (5 ; 105 ; 205 ; 405).

7. Cylindre selon la revendication 6,
**caractérisé en ce que**
la zone de déviation (7 ; 207) entoure globalement l'élément de déviation.

8. Cylindre selon la revendication 6,
**caractérisé en ce que**
l'axe longitudinal (6) de l'élément de déviation (105 ; 405) est conçu sous la forme d'un axe médian rigide.

9. Cylindre selon l'une quelconque des revendications 6 à 8,
**caractérisé en ce que**
la zone de déviation (7 ; 107 ; 207; 407) met le liquide circulant en rotation.

10. Cylindre selon l'une quelconque des revendications 6 à 9,
**caractérisé en ce que**
la zone de déviation a une conformation spiroïdale croissante dans la direction longitudinale (L) de l'élément de déviation (5 ; 105 ; 205 ; 405).

11. Cylindre selon l'une quelconque des revendications 6 à 9,
**caractérisé en ce que**
la zone de déviation (7 ; 107 ; 407) est conçue sous la forme d'une vis sans fin.

12. Cylindre selon l'une quelconque des revendications 6 à 11,
**caractérisé en ce que**
l'élément de déviation (205) est conçu à la manière d'un ressort cylindrique.

13. Cylindre selon l'une quelconque des revendications 1 à 12,
**caractérisé en ce que**
au moins l'un des conduits (101 ; 201 ; 301 ; 501 ; 601) comporte sur une zone d'extrémité axiale un coudage (102 ; 202 ; 302) de 180° et un retour parallèle (103 ; 203 ; 303).

14. Cylindre selon la revendication 13,
**caractérisé en ce que**
au moins un conduit (201 ; 301 ; 501 ; 601) comprend plusieurs coudages (202 ; 302).

15. Cylindre selon l'une quelconque des revendications 1 à 14,
**caractérisé en ce que**
au moins l'un des conduits (501 ; 601) comporte un nombre différent d'orifices d'entrée et de sortie (E ; A) pour le fluide.

16. Cylindre selon l'une quelconque des revendications 1 à 15,
**caractérisé en ce que**
le cylindre a une cavité centrale axiale (401) et au moins un élément de déviation (405) est disposé dans cette dernière.

17. Cylindre selon l'une quelconque des revendications 6 à 16,
**caractérisé en ce que**
l'élément de déviation (5 ; 105 ; 205 405) a des zones de déviation (7a; 7b) avec différents pas.

18. Cylindre selon l'une quelconque des revendications 6 à 17,
**caractérisé en ce que**
l'élément de déviation (5 ; 105 ; 205 ; 405) présente des écarts de son diamètre le long de son axe longitudinal (6).

19. Cylindre selon l'une quelconque des revendications 6 à 18,
**caractérisé en ce que**
un élément de déviation de forme hélicoïdale (205) a le long de sa longueur des évidements centraux présentant différents diamètres.

20. Cylindre selon l'une quelconque des revendications 1 à 12,
**caractérisé en ce que**
les distances entre les zones de déviation (7 ; 7a ; 7b) ont différentes dimensions mutuelles.

21. Cylindre selon l'une quelconque des revendications 6 à 20,
**caractérisé en ce que**
les zones de déviation (405) comportent des zones de surfaces de déviation d'orientation statistique quelconque pour créer des courants chaotiques.
